# EUROPÄISCHE PATENTSCHRIFT

(11) **EP 1 306 305 B1**
(45) Veröffentlichungstag und Bekanntmachung des Hinweises auf die Patenterteilung: **27.05.2009**
(21) Anmeldenummer: 02023950.5
(22) Anmeldetag: 25.10.2002
(51) Int. Cl.: B64F 5/00, G07C 3/00, G01D 21/02, G06F 17/40

(54) **Flugzeugwartungsdiagnosesystem sowie Flugzeugwartungsdiagnoseverfahren**
Method and system for aircraft maintenance
Procédé et système de maintenance d'aéronefs

(30) Priorität: 27.10.2001 DE 10153151
(43) Veröffentlichungstag der Anmeldung: 02.05.2003
(73) Patentinhaber: Airbus Deutschland GmbH, 21129 Hamburg (DE); EADS Deutschland GmbH, 81663 München (DE)
(72) Erfinder: Halm, Jürgen, 27777 Ganderkesee (DE); Hechtenberg, Kurt-Volker, 83052 Brucksmühl (DE); Kolander, Werner, 22453 Hamburg (DE)
(74) Vertreter: Habenicht, Wieland

(56) Entgegenhaltungen:
- WO-A-01/29783
- GB-A- 2 349 020
- US-A- 5 758 300
- US-A1- 2001 008 083

## Beschreibung

Die Erfindung betrifft ein Diagnosesystem sowie ein Diagnoseverfahren zur Unterstützung der Flugzeugwartung.

Für die Wartung von Flugzeugen werden derzeit in vorbestimmten, regelmäßigen Abständen umfangreiche Wartungschecks durchgeführt. Um eine für den Flugbetrieb notwendige Zuverlässigkeit und Sicherheit zu erreichen, werden dabei die Komponenten der einzelnen Flugzeugsysteme regelmäßig überprüft und/oder nach einer gewissen Einsatzzeit ausgetauscht. Aufgrund der Vielzahl und Komplexität der zu überprüfenden Teile ist es oft aufwendig, die jeweilige Komponente auszubauen, eine Fehlerüberprüfung und Prüfung der Funktionsfähigkeit durchzuführen und wiedereinzubauen bzw. gegen ein neues Gerät auszutauschen. Auch treten möglicherweise Fehler während eines Fluges auf, die während eines Boden-Checks nicht erkannt werden. So kann beispielsweise der Verschleiß in den Aktuatoren der Flügelklappensysteme dazu fuhren, dass das gesamte Flugzeug durch Regelschwingungen in Vibration versetzt wird. Am Boden ist dieser Fehler dann meist nicht reproduzierbar, der fehlerhafte Aktuator kann nicht sicher geortet werden und es werden aus Sicherheitsgründen unter Umständen auch funktionsfähige Aktuatoren ausgetauscht, was erhebliche Kosten verursacht Die Wartungskosten sind demnach ein wesentlicher Bestandteil der laufenden Betriebskosten von Verkehrsflugzeugen.

Aus GB 2 349 020 ist die Überwachung einer Maschine bekannt, bei der das Überwachungssystem einen Controller und eine Schnittstellenvorrichtung umfasst, zwischen denen eine Infrarot-, Funk- oder Drahtverbindung besteht. Ein oder mehrere Ports empfangen Signale von Wandlern an der Maschine. Die Signale werden verarbeitet und können In Speichern abgelegt werden. Die verarbeiteten Signale werden von einem Schnittstellenport an einen Controllerport übermittelt.

Aus US 2001/0008083 ist die Überwachung des Reifenzustandes eines Fahrzeugs bekannt. Dabei wird wenigstens ein Reifenparameter durch Messung des Drehwinkels des Reifens oder Rades erfasst Die gemessene Position wird von dem Rad bzw. Reifen an einen Empfänger im Fahrzeug übermittelt.

Der Erfindung liegt daher die Aufgabe zugrunde, zur Unterstützung der Wartung eines Verkehrsflugzeuges eine schnelle und sichere Ortung von Fehlern sowie eine entsprechende Informationsbereitstellung für das Wartungspersonal mit einem möglichst geringem Aufwand zu realisieren und damit eine Verkürzung der Reparaturzeit zu erreichen.

Diese Aufgabe wird bei einer gattungsgemäßen Vorrichtung mit den im Patentanspruch 1 genannten Maßnahmen gelöst. Ein gattungsgemäßes Verfahren ist im Anspruch 16 angegeben.

Dabei ist insbesondere von Vorteil, dass Wartungskosten als wesentlicher Bestandteil der laufenden Betriebskosten von Verkehrsflugzeugen erheblich gesenkt werden können. Eine Überprüfung der Systeme und Komponenten sowie eine sichere Ortung von Fehlern ist in einer kürzeren Zeit möglich geworden. Durch Zurverfügungstellen von Diagnoseinformationen aufgrund von aktuellen Messwerten der Flugzeugsysteme ist eine gezielte Wartungsunterstützung erreicht.

Weiterbildungen und vorteilhafte Ausgestaltungen sind in den Unteransprüchen 2 bis 15 und 17 bis 18 sowie auch in der nachfolgenden Figurenbeschreibung angegeben.

In der Zeichnung sind Ausführungsbeispiele der Erfindung dargestellt, das nachstehend anhand der Figuren 1 bis 4 beschrieben ist. In den Figuren sind gleiche Bauteile mit gleichen Bezugszeichen versehen.

Die Zeichnung zeigt im einzelnen:
- Fig. 1: eine schematische Darstellung eines Flugzeuges beim "Walk Around Check",
- Fig. 1A: Darstelllung der Funktionsweise einer energieautarken Diagnose-Sensorik,
- Fig. 2: die Darstellung einer Fehlerdiagnose bei Aktuatoren im Flügelbereich eines Verkehrsflugzeuges,
- Fig. 3: die Darstellung einer Diagnose von Wassergehalt im Hydrauliksystem des Flugzeuges,
- Fig. 4: die Darstellung einer Diagnose vom Wassergehalt im Treibstoff eines Flugzeugtanksystems und
- Fig. 5: die Darstellung eines Ablaufs einer Diagnoseabfrage.

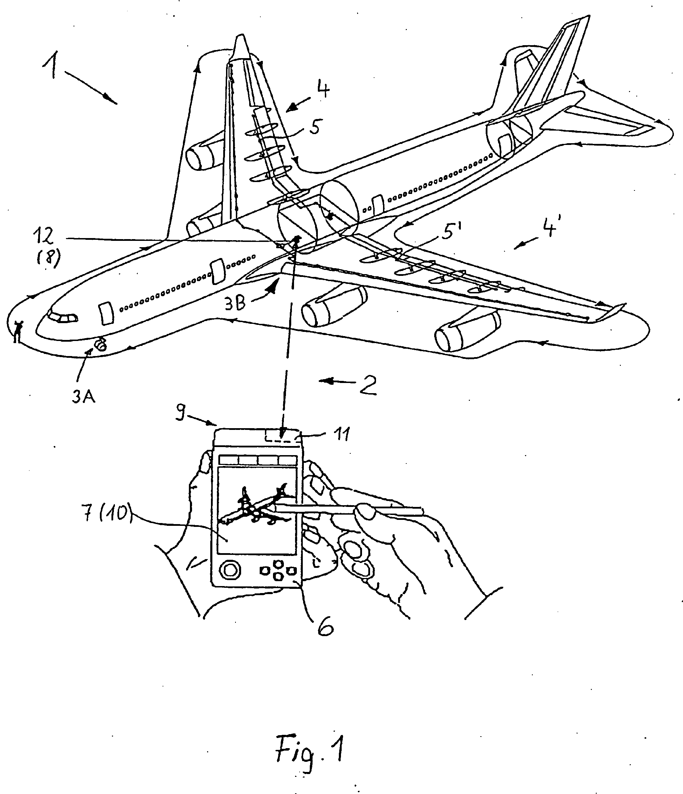

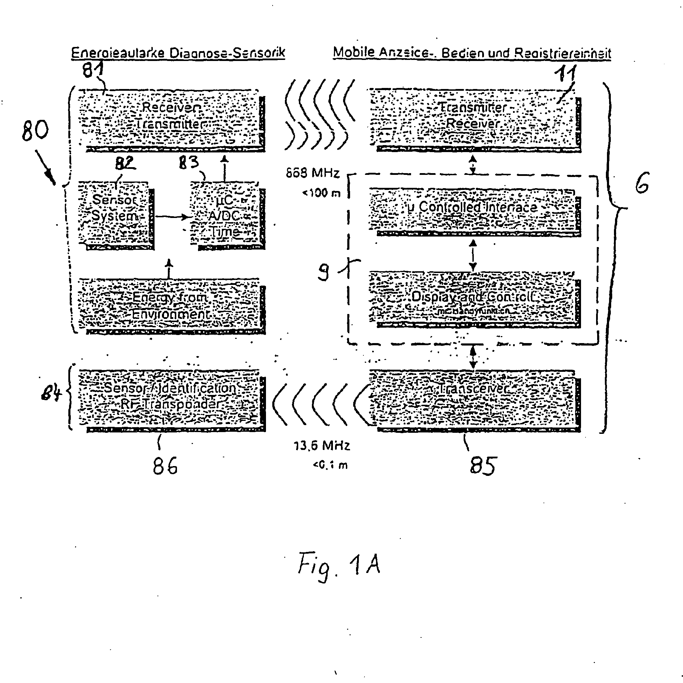

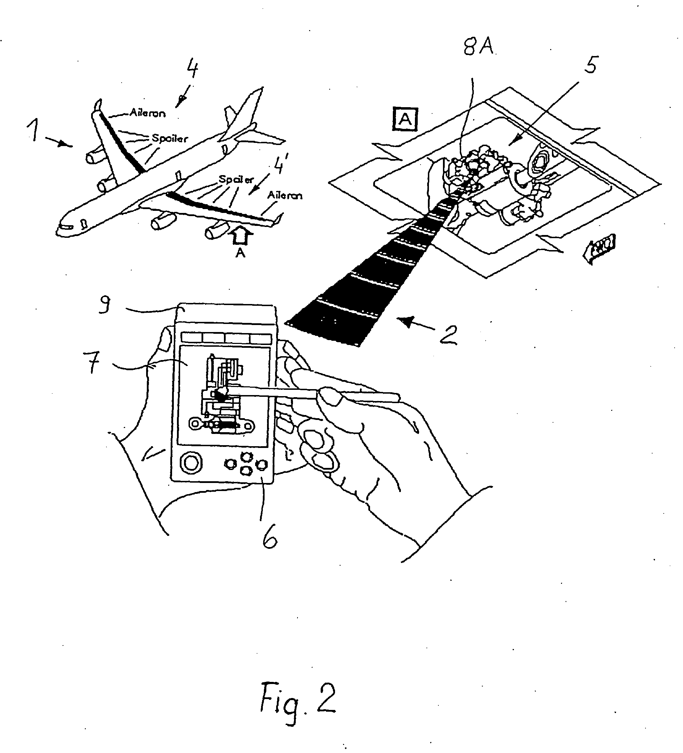

In Fig. 1 ist in einer schematischen Darstellung ein am Boden befindliches Verkehrsflugzeug 1 ersichtlich. Vor jedem Flug ist ein sogenannter "Walk Around" Check zu absolvieren, d.h. ein Mechaniker überprüft die Funktionsfähigkeit wichtiger Systeme. Dafür ist - wie in Pfeilen angedeutet - eine Umrundung des gesamten Flugzeuges notwendig und es werden wichtige Flugzeugsysteme und Flugzeugkomponenten überprüft, beispielsweise erfolgen Prüfungen am Bugrad 3A und Fahrwerksrädern 3B mit Abfrage des Luftdruckes und eine Kontrolle der Bremsen. Unter anderem erfolgt auch eine Überprüfung der Klappensysteme 4 und 4', wie beispielsweise Spoiler sowie Landeklappen und die für die Verstellung notwendigen Hydraulikaktuatoren - beispielhaft mit 5 bezeichnet. Problematisch dabei ist insbesondere, dass die Klappensysteme 4, 4' und deren Stelleinrichtungen 5, 5' am Flügel aufgrund der Höhe des Flügels sowie aufgrund von vorhandenen Abdeckungen schwer zugänglich sind. Landeklappenaktuatoren befinden sich beispielsweise bei großen Verkehrsflugzeugen in einer Höhe von 4 bis 5 Metern ausgehend von der Bodenfläche. Erfindungsgemäß ist vorgesehen, dass ein mit dem Bodencheck beauftragter Mechaniker ein Handgerät 6 als Teil eines Diagnosesystems 2 als Arbeitsmittel erhält, das zum einen die für eine spezielle Wartungsaufgabe erforderlichen Wartungsinformationen (Checkliste mit abzuarbeitenden Punkten) auf einem Display 7 anzeigen sowie Diagnoseinformationen von wartungsintensiven Flugzeugsystemen abfragen kann. Die Wartungsinformationen können abhängig vom Einsatzfall des Diagnosesystems umfassend am Handgerät 6, vorzugsweise durch ein austauschbares Speichermedium, zur Verfügung gestellt werden. In einer weiteren Ausführung ist eine Verbindung des Handgerätes 6 zu einer stationären Einheit, beispielsweise einem Personalcomputer oder einem Server vorgesehen, wobei die Verbindung über eine geeignete Schnittstelle erfolgt, die entsprechend der zu übertragenden Datenmenge auszuwählen ist.
Zur Erfassung von Diagnoseinformationen sind Sensoreinrichtungen 8 an den zu wartenden Flugzeugsystemen vorgesehen. Beispielsweise sind Sensoren an den Hydraulikaktuatoren 5 und 5' vorgesehen, um Aktuatordefekte detektieren zu können. Die Sensorinformationen werden während eines Bodenchecks abgefragt, ausgewertet und eine Fehlerdiagnose (örtlich bestimmter Aktuator in Ordnung bzw. fehlerhaft) wird auf dem Display 7 des Handgeräts 6 angezeigt. Eine Ausführungsform zur Diagnose von Aktuatoren ist näher in der Fig. 2 beschrieben.

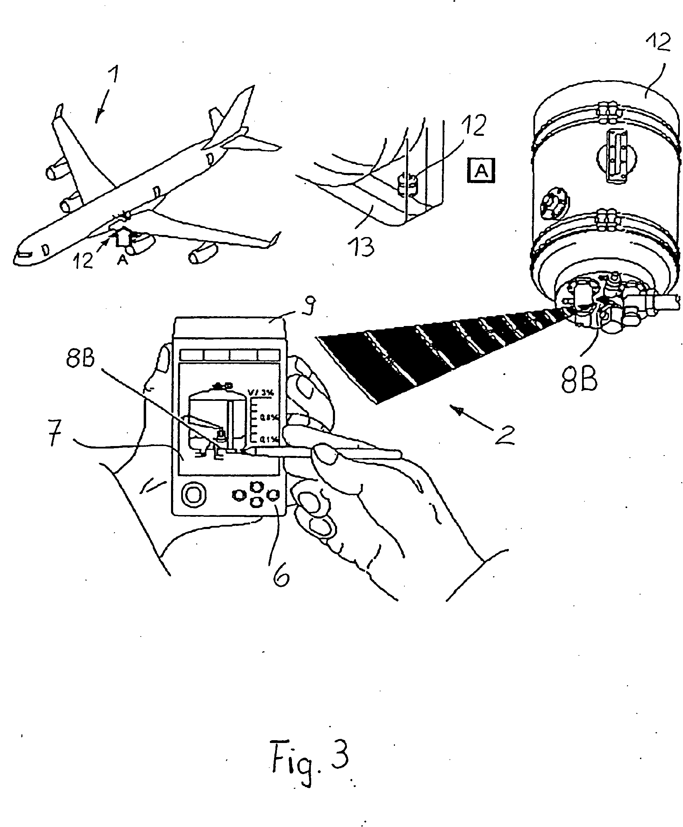

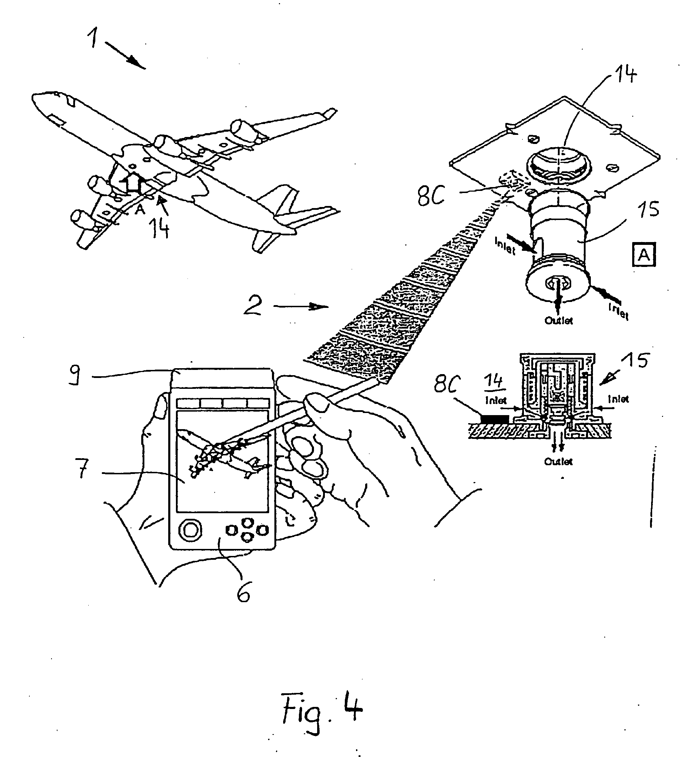

Die Sensoreinrichtungen 8 können auch zur Abfrage der Wasserkonzentration, der Partikelkonzentration oder dem Füllstand in Hydrauliksystemen oder im Treibstoff vorgesehen werden. Ausführungsformen dieser Art sind in den Fign. 3 und 4 angegeben.

Für die Überprüfung des Flugzeugsysteme während eines Bodenchecks werden die entsprechenden Sensorsignale über Sendeeinrichtungen an eine Verarbeitungseinheit 9 gesendet und dort verarbeitet und auf einer Anzeigeeinheit 10 als Information für den Mechaniker zur Verfügung gestellt. Die Verarbeitungseinheit 9 empfängt drahtlos mit einem Empfänger 11 die Sensorsignale. Eine Verarbeitung der Informationen kann mittels üblichen stationären Rechnern oder in einer bevorzugten Ausführungsform direkt mittels Pocket-PC's oder Laptops erfolgen und dem Mechaniker zur Verfügung gestellt werden. Vorzugsweise ist vorgesehen, dass das Handgerät 6 als Arbeitsmittel für den Mechaniker dafür neben der Anzeigeeinrichtung 10 auch die Verarbeitungseinheit 9 enthält und er somit unmittelbar und vor Ort eine Überprüfung der Flugzeugkomponenten und eine Fehlerdiagnose vornehmen kann. Weiterhin ist vorgesehen, dass eine Signalübertragung von der Sensoreinrichtung 8 zur Verarbeitungseinheit 9 kabellos über einen größeren Bereich, ungefähr über eine Distanz von mindestens 12 m, möglich ist. Somit wird eine Fernabfrage von Informationen gerade bei Großraumflugzeugen, bei denen beispielsweise schon ein Zugang zu bestimmten Klappen, Stelleinrichtungen und den Flügeln aufgrund der großen Dimensionen ohne Hilfsmittel nicht funktioniert, mit großer Zuverlässigkeit erreicht. Eine Signalübertragung ist beispielsweise möglich mit Funkverbindungen oder Infrarotsignalen. Die zur Signalerzeugung und Signalübertragung notwendige Energie wird im Bereich der Sensoreinrichtungen 8 zur Verfügung gestellt. Die Sensoreinrichtungen 8 sind vorzugsweise möglichst ohne Eingriff in vorhandene Flugzeugsysteme energieautark ausgebildet. Damit wird sichergestellt, dass eine Integration der Sensoreinrichtungen 8 in das Flugzeug die Funktionsfähigkeit der vorhandenen Flugzeugsysteme nicht beeinträchtigt und keine zusätzliche Anbindung an die Energieversorgung des Flugzeuges notwendig ist. Die Energieversorgung der Sensoreinrichtungen 8 kann beispielsweise über separate Energiequellen oder Energiespeicher vorgesehen sein. Vorzugsweise sind Energiegeneratoren anzuwenden, die aus der Umwelt Energie gewinnen, wie beispielsweise aus der Vibration. Dargestellt ist diese energieautarke Diagnose-Sensorik mit der Möglichkeit einer aktiven drahtlosen Abfrage 80 in Fig. 1A. Die Sensoreinrichtung 8 umfasst eine Sender-/Empfängereinheit (Receiver/Transmitter) 81, einen Sensor 82 sowie einen Mikrocontroller ( C, Signalwandler A/DC, Time) 83 zur Erfassung der Daten und beispielsweise auch der Zeit. Wenn am Handgerät 6 ein Abfragesignal ausgelöst wird, erfolgt die Übermittlung der Daten an die Sender-/Empfänger-Einheit (Receiver/Transmitter) 11 des Handgerätes 6. Die Verarbeitungseinheit 9 mit der Anzeigeeinrichtung (Display and Controll) sowie mit einer mikroprozessorgestützen Schnittstelle ( Controlled Interface) und kann zumindest einige der nachfolgend angegebenen Funktionen ausführen: Arbeitsfortschritt anzeigen, drahtlos Sensoreinrichtungen abfragen, registrieren und anzeigen der Daten, austauschen von Daten und Anweisungen und/oder anzeigen visualisierter Reparaturanleitungen. Neben der Möglichkeit einer aktiven drahtlosen Abfrage 80 der Sensoreinrichtungen 8 kann eine passive drahtlose Abfrage 84 durch das Handgerät 6 erfolgen. Hier benötigen die Sensoren keine eigene Energie. Während der Abfrage wird auf einer kürzeren Entfernung , beispielsweise < 0,1m, ausgehend von einem Transceiver 85 ein Sensor identifiziert sowie ein HF (rf[radio-frequency])-Transponder 86 aktiviert, eine Sensorabfrage durchgeführt und dieser Messwert an den Transceiver 85 übermittelt. Beispielsweise eine Messung des Luftdruckes in Reifen ist mit dieser Methode mess- und übermittelbar. Die benötigte Energie wird hier aus der Sendeleistung entnommen. Eine weitere Ausführungsform der Erfindung nutzt als Diagnose-Sensorik Sensoreinrichtungen, die eine aktive Speicherung des Messwerts vorsehen. Die dafür benötigte Energie kann sehr gering sein. Das Abrufen des Speicherwerts erfolgt mit der genannten passiven drahtlosen Abfrage 84, wobei die benötigte Energie aus der Sendeleistung des Transceivers 85 erbracht wird. Ebenfalls denkbar ist die Anwendung von optischen Transpondern, die optische aktive bzw. passive Abfragen ermöglichen.

In Fig. 2 ist eine Ausführungsform des Diagnosesystems im Bereich von Stelleinrichtungen für Klappensysteme 4, 4' an den Flügeln des Verkehrsflugzeuges 1 dargestellt. Eine Vielzahl von Aktuatoren 5 sind für die Verstellung der Flügelklappen notwendig und ein Verschleiß der Aktuatoren ist regelmäßig zu überprüfen. Ein Verschleiß der Spoiler-Aktuatoren 5 kann beispielsweise dazu führen, dass das gesamte Flugzeug in einzelnen Flugphasen durch Regelschwingungen in Vibration versetzt wird (genannt Slipping-Effekt). Am Boden ist dieser Fehler dann meist nicht mehr reproduzierbar und eine genaue Bestimmung der fehlerhaften Aktuatoren kann mit Hilfe der am entsprechenden Aktuator 5 angeordneten Sensoreinrichtung 8A vorgenommen werden, die Messdaten während des Fluges aufgenommen, gegebenenfalls verarbeitet und gespeichert hat. Eine Vorverarbeitung des Sensorsignals innerhalb eines Vorverarbeitungsmoduls der Sensoreinrichtung 8 kann vorteilhaft sein, um eine Datenreduktion zu erreichen. Ersichtlich ist in der Fig. 2 in einer vergrößerten Darstellung der Flugzeugspoiler-Aktuator 5, an dem die Sensoreinrichtung 8 äußerlich aufgebracht ist. Mit einem Sensor wie beispielsweise einem Piezo-Sensor (ermöglicht Signalerzeugung aufgrund von mechanischem Druck) und/oder einem Beschleunigungssensor wird zumindest einer der zur Diagnose bei Vibrationen (Slipping-Effekt) auftretenden signifikanten Parameter, z. B. Hydraulik-Steuerdruckstöße oder Steuerkolben-Osszillation gemessen, gespeichert, gegebenenfalls vorverarbeitet - d.h. nur bestimmte Daten bzw. Zwischenergebnisse werden für den weiteren Ablauf benötigt - und diese werden gespeichert und bei Bedarf kabellos an die Verarbeitungseinheit 9 übermittelt. Der Mechaniker kann auf dem Display 7 des Handgerätes 6 die entsprechende Diagnoseinformation des jeweiligen Aktuators 5 abfragen und sicher entscheiden, ob aufgrund von Slipping-Effekten ein Austausch des Aktuators 5 notwendig ist. Da eine Vielzahl von Aktuatoren 5 für die Bewegung der Klappen am Verkehrsflugzeug eingesetzt werden, wird es mit der genauen Ortung von defekten Aktuatoren ermöglicht, einen Austausch bzw. schon der aufwendige Ausbau und Test eines funktionsfähigen Spoiler-Aktuators zu vermeiden.

In Fig. 3 ist eine Ausführungsform des Diagnosesystems 2 im Bereich eines Hydrauliksystems für Stelleinrichtungen im Verkehrsflugzeug 1 dargestellt. An einem Hydraulikbehälter 12, der in der gezeigten Ausführung im Bereich des Fahrwerkschachtes 13 des Flugzeuges 1 angeordnet ist, ist regelmäßig der Wassergehalt der Hydraulikflüssigkeit festzustellen, denn durch Wassereintrag wird die Lebensdauer von Hydraulikflüssigkeit erheblich verkürzt. Ein hoher Wassergehalt führt zu Schädigungen des gesamten Hydrauliksystems. Durch eine Feststellung des Zustandes, wie u.a. des Wassergehaltes oder der Partikelkonzentration in der Hydraulikflüssigkeit kann frühzeitig signalisiert werden, ob eine Reinigung oder ein Austausch der Flüssigkeit notwendig ist. Die Sensoreinrichtung 8B ist für diesen Anwendungsfall zur Messung der Konzentration von Wasser in dem Hydraulikbehälter an der Unterseite des Behälters 12 angeordnet. Über Sendeeinrichtungen werden die Messgrößen an die Verarbeitungseinheit 9 im Handgerät 6 übermittelt. Der Mechaniker, der eine Zustandsdiagnose der Hydraulikflüssigkeit vornehmen soll, kann am Display 7 die Diagnoseinformation, beispielsweise den Wassergehalt ablesen. Er muss nicht durch die Zugangsklappe in den Fahrwerksschacht einsteigen und unmittelbar am Hydraulikbehälter 12 Messungen vornehmen.

In Fig. 4 ist eine Ausführungsform des Diagnosesystems 2 im Bereich eines Treibstofftanks 14 im Verkehrsflugzeug 1 dargestellt. Wasserablagerungen im Treibstofftank 14 müssen regelmäßig entfernt werden. Dafür ist ein Wasserdrainageventil 15 vorgesehen. In Nähe zu diesem Ventil 15 ist ein Fuel-Water-Detection-Sensor 8C innerhalb des Tanks 14 angeordnet. Durch die Sensoreinrichtung 8C, die die Wassermenge im Tank bzw. den Wasserstand der abgesetzten Wassermenge messen kann und an die Verarbeitungseinheit 9 übermittelt, kann dem Wartungspersonal die Diagnose des Wasserstandes über die Anzeigeeinrichtung 10 (Display 7) mitgeteilt werden. Der Zeitpunkt für eine notwendige Wasserentleerung ist somit relativ genau bestimmbar und die erforderlichen Arbeiten brauchen nur bedarfsweise durchgeführt werden. Wie bereits zu den vorangegangenen Ausführungsformen erläutert, erfolgt auch hier die Übertragung der Messsignale von der Sensoreinrichtung 8C zur Verarbeitungseinheit 9 drahtlos. Am Handgerät 6 auf dem Display 7 erfolgt bei einer Anforderung der Diagnoseinformation durch das Wartungspersonal eine Fernabfrage des Wasserstandes im Tank 14. Das Signal wird vom Fuel Water Detection Sensor 8C zur Verarbeitungseinheit 9 übermittelt und mittels einer Auswertesoftware wird der Messwert verarbeitet und als Diagnoseinformation aufbereitet. In einer bevorzugten Ausführungsform wird abhängig von der Auswertesoftware dem Mechaniker neben dem Meßwert auch angezeigt, ob eine Wasserentleerung notwendig ist. Derartige Wartungsinformationen können abhängig vom Einsatzfall des Diagnosesystems umfassend am Handgerät 6, vorzugsweise durch ein austauschbares Speichermedium, zur Verfügung gestellt werden.

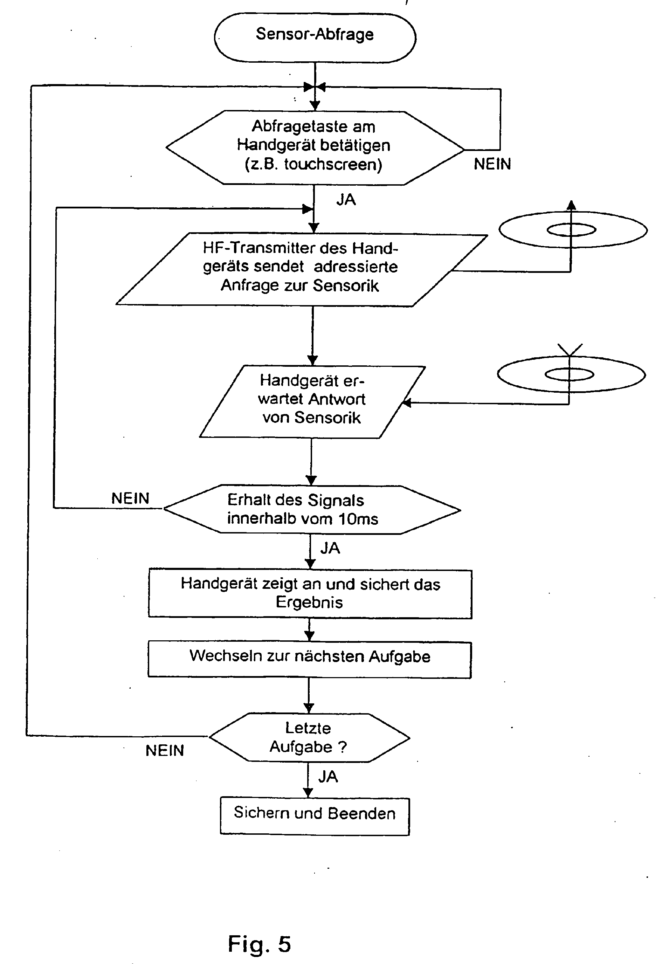

In Fig. 5 ist beispielhaft ein Flussdiagramm mit der Darstellung einer Diagnoseabfrage dargestellt. Sensorsignale liegen an einer Sensoreinrichtung 8 vor und können durch eine entsprechend adressierte Anfrage von dem Handgerät 6 aus abgerufen werden. Falls eine Abfrage nicht erfolgreich war und keine Antwort innerhalb einer bestimmten Zeit, beispielsweise 10ms, eingegangen ist, wird die Abfrage wiederholt. Die Sensorsignale werden an die Verarbeitungseinheit 9 übermittelt, verarbeitet, das Ergebnis abgespeichert und bedarfsweise angezeigt.
Nach Erledigung der Abfrage kann eine neue Abfrage einer nächsten Diagnose-Sensorik durchgeführt werden.

Die vorliegende Erfindung ist nicht auf die genannten Ausführungsbeispiele beschränkt, vielmehr ist der Einsatz der Erfindung für eine sensorbasierte Wartungsunterstützung an vielen Flugzeugkomponenten bzw. Flugzeugsystemen möglich. Wartungsintensive Systemkomponenten, d.h. Bauteile, die aufgrund eines häufigen Ausfalls oder der Sicherheitsrelevanz häufig überprüft werden müssen, können mit der vorliegenden Erfindung ausgerüstet bzw. überprüft werden, was den Wartungsaufwand für diese Bauteile erheblich senkt.

## Patentansprüche

1. Flugzeugwartungsdiagnosesystem zur Unterstützung der Flugzeugwartung eines Verkehrsflugzeuges, mit:
einer Sensoreinrichtung (8), die bei wartungsintensiven Flugzeugsystemen bzw. - komponenten (5, 5'; 12; 14) an einem Überprüfungsort während des Fluges oder der Bodenzeit Sensorsignale erzeugt und speichert,
einer Energieversorgung für die Sensoreinrichtung (8), die unabhängig von einem Flugzeugbordnetz ist,
einer Verarbeitungseinheit (9) zur Durchführung einer Signalverarbeitung,
einer während der Bodenzeit des Flugzeugs bestehenden kabellosen Verbindung von der Sensoreinrichtung (8) zu der Verarbeitungseinheit (9) zur Übermittlung der Sensorsignale und
einer Anzeigeeinrichtung (10), an welche selektierte Sensorsignale oder Auswertesignale übermittelt werden und die Diagnoseinformationen sowie gegebenenfalls für eine Wartungsaufgabe notwendige Wartungsinformationen anzeigt.

2. Flugzeugwartungsdiagnosesystem nach Anspruch 1,
**dadurch gekennzeichnet, dass**
die Sensoreinrichtung (8) ein Verarbeitungsmodul zur Vorverarbeitung der Sensorsignale innerhalb der Sensoreinrichtung (8) aufweist, wobei die Sensorsignale innerhalb des Verarbeitungsmoduls in Auswerte- bzw. Zwischensignale verarbeitet werden.

3. Flugzeugwartungsdiagnosesystem nach Anspruch 2,
**dadurch gekennzeichnet, dass**
die Sensoreinrichtung (10) mit einem Energiegenerator und/oder einem Energiespeicher ausgestattet ist.

4. Flugzeugwartungsdiagnosesystem nach einem der Ansprüche 1 bis 3,
**dadurch gekennzeichnet, dass**
die Sensoreinrichtung (8) einen HF-Transponder (84) zur passiven drahtlosen Abfrage von Sensorsignalen aufweist.

5. Flugzeugwartungsdiagnosesystem nach einem der Ansprüche 3 oder 4,
**dadurch gekennzeichnet, dass**
die Sensoreinrichtung (8) ein aktives Speichermittel zur Speicherung eines 20 Sensorsignals sowie einen Transponder (84) zur passiven drahtlosen Abfrage von Sensorsignalen aufweist.

6. Flugzeugwartungsdiagnosesystem nach einem der Ansprüche 1 bis 5,
**dadurch gekennzeichnet, dass**
die Sensoreinrichtung (8) zumindest einen optischen Transponder aufweist zur optischen aktiven bzw. passiven Abfrage.

7. Flugzeugwartungsdiagnosesystem nach einem der Ansprüche 4 bis 6,
**dadurch gekennzeichnet, dass**
die Übermittlung der Sensorsignale mittels Funk- oder Infraroteinrichtungen vorgesehen ist.

8. Flugzeugwartungsdiagnosesystem nach einem der Ansprüche 1 bis 7,
**dadurch gekennzeichnet, dass**
die Verarbeitungseinheit (9) Mittel zur Auswertung der Sensorsignale für eine Fehlerdiagnose enthält.

9. Flugzeugwartungsdiagnosesystem nach einem der Ansprüche 1 bis 8,
**dadurch gekennzeichnet, dass**
die Verarbeitungseinheit (9) ein Speichermedium zur Speicherung von Diagnoseinformationen sowie von für eine Wartungsaufgabe notwendige Wartungsinformationen aufweist.

10. Flugzeugwartungsdiagnosesystem nach einem der Ansprüche 1 bis 9,
**dadurch gekennzeichnet, dass**
eine Anzeigeeinrichtung (10) ein Display (7) zur Anzeige von Diagnoseinformationen sowie von für eine Wartungsaufgabe notwendige Wartungsinformationen aufweist.

11. Flugzeugwartungsdiagnosesystem nach einem der Ansprüche 1 bis 10,
**dadurch gekennzeichnet, dass**
die Verarbeitungseinheit (9) sowie die Anzeigeeinrichtung (10) in einem Handgerät (6) zusammengefasst sind.

12. Flugzeugwartungsdiagnosesystem nach Anspruch 11, **dadurch gekennzeichnet, dass** das Handgerät (6) an eine stationäre Computerstation, beispielsweise ein Personalcomputer und/oder ein Server, anschließbar ist.

13. Flugzeugwartungsdiagnosesystem nach einem der Ansprüche 1 bis 12,
**dadurch gekennzeichnet, dass**
die Sensoreinrichtung (8, 8A) an Hydraulikaktuatoren (5, 5') von Flügelklappen (4, 4') zur Ermittlung des Aktuatorverschleißes vorgesehen ist.

14. Flugzeugwartungsdiagnosesystem nach einem der Ansprüche 1 bis 13,
**dadurch gekennzeichnet, dass**
die Sensoreinrichtung (8, 8B) im unteren Bereich des Hydraulikbehälters (12) zur Ermittlung des Wassergehalts und/oder der Partikelkonzentration vorgesehen ist.

15. Flugzeugwartungsdiagnosesystem nach einem der Ansprüche 1 bis 14,
**dadurch gekennzeichnet, dass**
die Sensoreinrichtung (8, 8C) im Flugzeugtank (14) im Bereich des Wasserdrainageventils (15) zur Ermittlung der Wasserkonzentration vorgesehen ist.

16. Flugzeugwartungsdiagnoseverfahren zur Unterstützung der Flugzeugwartung eines Verkehrsflugzeuges, mit den Schritten:
an wartungsintensiven Flugzeugsystemen bzw. -komponenten (5, 5'; 12; 14) werden an einem Überprüfungsort in einer Sensoreinrichtung (8) während des Fluges oder der Bodenzeit Sensorsignale erzeugt und gespeichert,
die Sensoreinrichtung (8) wird unabhängig von einem Flugzeugbordnetz mit Energie versorgt,
die Sensorsignale werden kabellos während der Bodenzeit des Flugzeugs von der Sensoreinrichtung (8) zu einer Verarbeitungseinheit (9) übermittelt, in der Verarbeitungseinheit (9) erfolgt eine Signalverarbeitung,
selektierte Sensorsignale oder Auswertesignale werden an eine Anzeigeeinrichtung (10) übermittelt und
diese Diagnoseinformationen sowie gegebenenfalls für eine Wartungsaufgabe notwendige Wartungsinformationen werden an der Anzeigeeinrichtung (10) angezeigt.

17. Flugzeugwartungsdiagnoseverfahren nach Anspruch 16,
**dadurch gekennzeichnet, dass**
die Sensorsignale innerhalb der Sensoreinrichtung (8) zur Erreichung einer Datenreduktion vorverarbeitet werden und Auswerte- bzw. Zwischensignale an die Verarbeitungseinheit (9) übermittelt werden.

18. Flugzeugwartungsdiagnoseverfahren nach einem der Ansprüche 16 bis 17,
**dadurch gekennzeichnet, dass**
die an die Verarbeitungseinheit (9) übermittelten Signale (Sensorsignale bzw. bereits vorverarbeitete Zwischensignale) in Abhängigkeit von der notwendigen Wartungsaufgabe verarbeitet werden.

## Claims

1. Aircraft maintenance diagnosis system for assisting with the aircraft maintenance of a commercial aircraft, with:
a sensor device (8) which in the case of maintenance-intensive aircraft systems or components (5, 5'; 12; 14) at a test site during flight or ground time generates and stores sensor signals,
an energy supply for the sensor device (8) which is independent of an onboard power supply,
a processing unit (8) for carrying out signal processing, a cableless connection existing during the ground time of the aircraft from the sensor device (8) to the processing unit (9) for transferring the sensor signals and
a display unit (10) to which selected sensor signals or evaluation signals are transferred and which displays the diagnosis data as well as where necessary the maintenance information required for a maintenance task.

2. Aircraft maintenance diagnosis system according to claim 1 **characterised in that** the sensor device (8) has a processing module for pre-processing the sensor signals inside the sensor device (8) wherein the sensor signals are processed inside the processing module into evaluation and intermediate signals.

3. Aircraft maintenance diagnosis system according to claim 2 **characterised in that** the sensor device (10) is equipped with an energy generator and/or an energy accumulator.

4. Aircraft maintenance diagnosis system according to one of claims 1 to 2 **characterised in that** the sensor device (8) has an HF transponder (84) for the passive wireless scanning of sensor signals.

5. Aircraft maintenance diagnosis system according to one of claims 3 or 4 **characterised in that** the sensor device (8) has an active memory means for storing a sensor signal as well as a transponder (84) for the passive wireless scanning of sensor signals.

6. Aircraft maintenance diagnosis system according to one of claims 1 to 5 **characterised in that** the sensor device (8) has at least one optical transponder for the optical active or passive scanning.

7. Aircraft maintenance diagnosis system according to one of claims 4 to 6 **characterised in that** the transfer of sensor signals is provided by means of radio or infrared mechanisms.

8. Aircraft maintenance diagnosis system according to one of claims 1 to 7 **characterised in that** the processing unit (9) contains means for the evaluation of the sensor signals for a fault diagnosis.

9. Aircraft maintenance diagnosis system according to one of claims 1 to 8 **characterised in that** the processing unit (9) has a memory medium for storing the diagnosis data as well as the maintenance data required for a maintenance task.

10. Aircraft maintenance diagnosis system according to one of claims 1 to 9 **characterised in that** a display mechanism (10) has a display (7) for indicating the diagnosis data as well as the maintenance data required for a maintenance task.

11. Aircraft maintenance diagnosis system according to one of claims 1 to 10 **characterised in that** the processing unit (9) as well as the display mechanism (10) are combined in one hand appliance (6).

12. Aircraft maintenance diagnosis system according to claim 11 **characterised in that** the hand appliance (8) is capable of being connected to a stationary computer station by way of example a personal computer and/or server.

13. Aircraft maintenance diagnosis system according to one of claims 1 to 12 **characterised in that** the sensor device (8, 8A) is provided on hydraulic actuators (5, 6') of wing flaps (4, 4') for determining the wear on the actuators.

14. Aircraft maintenance diagnosis system according to one of claims 1 to 13 **characterised in that** the sensor device (8, 8B) is provided in the lower area of the hydraulic container (12) for determining the water content and/or particle concentration.

15. Aircraft maintenance diagnosis system according to one of claims 1 to 14 **characterised in that** the sensor device (8, 8C) is provided in the aircraft tank (14) in the area of the water drainage valve (15) for determining the water concentration.

16. Aircraft maintenance diagnosis method for assisting with the aircraft maintenance of a commercial aircraft with the steps:
on maintenance-intensive aircraft systems and components (5, 5'; 12; 14) sensor signals are generated and stored at a test site in a sensor device (8) during the flight or the ground time,
the sensor device (8) is supplied with energy independently of an aircraft onboard power supply,
the sensor signals are transferred cableless during the ground time of the aircraft from the sensor device (8) to a processing unit (9),
signal processing takes place in the processing unit (9),
selected sensor signals or evaluation signals are transferred to a display unit (10) and
this diagnosis data as well as where applicable the maintenance data required for a maintenance task are displayed on the display unit (10).

17. Aircraft maintenance diagnosis method according to claim 16 **characterised in that** the sensor signals are pre-processed inside the sensor device (8) in order to achieve a reduction in the amount of data, and evaluation and intermediate signals are sent to the processing unit (9).

18. Aircraft maintenance diagnosis method according to one of claims 16 to 17 **characterised in that** the signals (sensor signals or already pre-processed intermediate signals) sent to the processing unit (9) are processed in dependence on the necessary maintenance task.

## Revendications

1. Système de diagnostic pour la maintenance d'avions destiné à faciliter la maintenance d'un avion de ligne, comportant
un dispositif de détection (8) qui produit et mémorise des signaux de capteurs relatifs à des systèmes ou composants d'avion nécessitant beaucoup de maintenance (5, 5' ; 12 ; 14) à un point de contrôle pendant le vol ou le temps passé au sol,
une alimentation en énergie pour le dispositif de détection (8), laquelle est indépendante d'un réseau de bord d'avion,
une unité de traitement (9) destinée à la mise en oeuvre d'un traitement de signaux, une liaison sans fil disponible pendant le temps que l'avion passe au sol entre le dispositif de détection (8) et l'unité de traitement (9) pour la transmission des signaux de capteurs et
un dispositif d'affichage (10) sur lequel sont transmis des signaux de capteurs ou des signaux d'analyse sélectionnés et sur lequel sont affichées les informations de diagnostic ainsi que, le cas échéant, des informations de maintenance requises pour une intervention de maintenance.

2. Système de diagnostic pour la maintenance d'avions selon la revendication 1,
**caractérisé en ce que** le dispositif de détection (8) présente un module de traitement destiné au traitement préliminaire des signaux de capteurs à l'intérieur du dispositif de détection (8), les signaux de capteurs étant traités à l'intérieur du module de traitement et transformés en signaux d'analyse ou intermédiaires.

3. Système de diagnostic pour la maintenance d'avions selon la revendication 2,
**caractérisé en ce que** le dispositif de détection (8) est équipé d'un générateur d'énergie et/ou d'un accumulateur d'énergie.

4. Système de diagnostic pour la maintenance d'avions selon l'une des revendications 1 à 3,
**caractérisé en ce que** le dispositif de détection (8) présente un transpondeur HF (84) pour l'interrogation passive sans fil de signaux de capteurs.

5. Système de diagnostic pour la maintenance d'avions selon l'une des revendications 3 ou 4,
**caractérisé en ce que** le dispositif de détection (8) présente un dispositif de stockage actif pour la mémorisation d'un signal de capteur ainsi qu'un transpondeur (84) pour l'interrogation passive sans fil de signaux de capteurs.

6. Système de diagnostic pour la maintenance d'avions selon l'une des revendications 1 à 5,
**caractérisé en ce que** le dispositif de détection (8) présente au moins un transpondeur optique pour l'interrogation optique active ou passive.

7. Système de diagnostic pour la maintenance d'avions selon l'une des revendications 4 à 6,
**caractérisé en ce que** la transmission des signaux de capteurs est prévue au moyen de dispositifs radio ou infrarouge.

8. Système de diagnostic pour la maintenance d'avions selon l'une des revendications 1 à 7,
**caractérisé en ce que** l'unité de traitement (9) comporte des moyens d'analyse des signaux de capteurs afin de réaliser un diagnostic de panne.

9. Système de diagnostic pour la maintenance d'avions selon l'une des revendications 1 à 8,
**caractérisé en ce que** l'unité de traitement (9) présente un support de mémoire afin de stocker des informations de diagnostic ainsi que des informations de maintenance requises pour une intervention de maintenance.

10. Système de diagnostic pour la maintenance d'avions selon l'une des revendications 1 à 9,
**caractérisé en ce qu'**un dispositif d'affichage (10) présente un écran (7) pour l'affichage d'informations de diagnostic ainsi que d'informations de maintenance requises pour une intervention de maintenance.

11. Système de diagnostic pour la maintenance d'avions selon l'une des revendications 1 à 10,
**caractérisé en ce que** l'unité de traitement (9) ainsi que le dispositif d'affichage (10) sont réunis dans un appareil portatif (6).

12. Système de diagnostic pour la maintenance d'avions selon la revendication 11,
**caractérisé en ce que** l'appareil portatif (8) peut être raccordé à un poste d'ordinateur fixe, par exemple un calculateur individuel et/ou un serveur.

13. Système de diagnostic pour la maintenance d'avions selon l'une des revendications 1 à 12,
**caractérisé en ce que** le dispositif de détection (8, 8A) est prévu sur des actionneurs hydrauliques (5, 6') de volets d'ailes (4, 4') afin de déterminer l'usure des actionneurs.

14. Système de diagnostic pour la maintenance d'avions selon l'une des revendications 1 à 13,
**caractérisé en ce que** le dispositif de détection (8, 8B) est prévu dans la partie inférieure du réservoir hydraulique (12) afin de déterminer la teneur en eau et/ou la concentration en particules.

15. Système de diagnostic pour la maintenance d'avions selon l'une des revendications 1 à 14,
**caractérisé en ce que** le dispositif de détection (8, 8C) est prévu dans le réservoir d'avion (14) dans la zone de la vanne de drainage d'eau (15) afin de déterminer la concentration en eau.

16. Procédé de diagnostic pour la maintenance d'avions destiné à faciliter la maintenance d'un avion de ligne, comportant les étapes suivantes :
au niveau de systèmes ou composants d'avion nécessitant beaucoup de maintenance (5, 5' ; 12 ; 14), des signaux de capteurs sont produits et
mémorisés sur un lieu de contrôle dans un dispositif de détection (8) pendant le vol ou le temps au sol,
le dispositif de détection (8) est alimenté en énergie indépendamment d'un réseau de bord d'avion,
pendant le temps que l'avion passe au sol, les signaux de capteurs sont transmis sans fil du dispositif de détection (8) à une unité de traitement (9),
un traitement des signaux s'effectue dans l'unité de traitement (9),
des signaux de capteurs ou des signaux d'analyse sélectionnés sont transmis à un dispositif d'affichage (10) et
ces informations de diagnostic ainsi que, le cas échéant, des informations de maintenance requises pour une intervention de maintenance, sont affichées sur le dispositif d'affichage (10).

17. Procédé de diagnostic pour la maintenance d'avions selon la revendication 16,
**caractérisé en ce que** les signaux de capteurs sont soumis à un traitement préliminaire à l'intérieur du dispositif de détection (8) afin d'obtenir une réduction des données et **en ce que** des signaux d'analyse ou intermédiaires sont transmis à l'unité de traitement (9).

18. Procédé de diagnostic pour la maintenance d'avions selon l'une des revendications 16 à 17,
**caractérisé en ce que** les signaux (signaux de capteurs ou signaux intermédiaires ayant déjà subi un traitement préliminaire) transmis à l'unité de traitement (9) sont traités en fonction de l'intervention de maintenance requise.
